# EUROPEAN PATENT APPLICATION

(11) **EP 4 779 076 A1**
(43) Date of publication of application: **22.07.2026**
(21) Application number: 24891080.4
(22) Date of filing: 19.09.2024
(51) Int. Cl.: D06M 11/80, C04B 35/80, C04B 35/577

(54) **BN-COATED CERAMIC FIBER, CERAMIC MATRIX COMPOSITE MATERIAL INCLUDING SAME, AND METHOD FOR PRODUCING BN-COATED CERAMIC FIBER**

(30) Priority: 13.11.2023 JP 2023192996
(71) Applicant: Mitsubishi Heavy Industries Aero Engines, Ltd., Komaki-shi, Aichi 485-0826, (JP)
(72) Inventor: SEKIGAWA, Takahiro, Komaki-shi, Aichi 485-0826 (JP); MATSUBARA, Shoichi, Komaki-shi, Aichi 485-0826 (JP); SATO, Mitsuhiko, Tachikawa-shi, Tokyo 190-0012 (JP)
(74) Representative: Studio Torta S.p.A.
(86) International application number: PCT/JP2024/033411
(87) International publication number: WO 2025/105038

(57) **Abstract**

Provided are: a BN-coated ceramic fiber in which the decrease in strength in a BN layer formation process is suppressed, and which has higher strength than before; a ceramic matrix composite material including the BN-coated ceramic fiber; and a method for producing a BN-coated ceramic fiber. A BN-coated ceramic fiber (1) according to the present disclosure comprises: a ceramic fiber (2) containing SiC as a main component; and a BN layer (3) containing BN as a main component and coating the surface of the ceramic fiber. The BN layer includes a first BN layer (3a) that is an amorphous phase and a second BN layer (3b) that is a crystalline phase. The first BN layer is located adjacent to the ceramic fiber and is sandwiched between the ceramic fiber and the second BN layer.

## Description

### Technical Field

The present disclosure relates to a BN-coated ceramic fiber, a ceramic matrix composite material including same, and a method for producing a BN-coated ceramic fiber.

### Background Art

In an aircraft industry, ceramic matrix composite materials (CMCs), which are approximately one-third as light as conventional metallic materials (nickel alloys) and have excellent heat resistance, are expected to be used with a view to improving combustion efficiency of engines.

As the ceramic matrix composite materials, a silicon carbide (SiC) matrix composite material in which a matrix containing SiC as a main component is formed between fibers containing SiC as a main component is known. In the ceramic matrix composite materials using first-generation SiC fibers, a carbon (C) layer that imparts damage tolerance is formed on surfaces of the SiC fibers. However, C is oxidized and disappears at 600°C or higher and SiO₂ is formed, and a phenomenon (pest behavior) in which the damage tolerance is lost occurs.

The first-generation SiC fibers have low heat resistance, and coating at a high temperature is difficult. However, with development of second-generation SiC fibers having heat resistance, a boron nitride (BN) layer is formed on surfaces of the SiC fibers (see PTLs 1 and 2). By forming the BN layer, a bond strength between the SiC fibers and the matrix is increased. As a result, it is considered that a composite material having a higher strength than a matrix material can be obtained.

### Citation List

### Patent Literature

[PTL 1] PCT Japanese Translation Patent Publication No. 2001-505864
[PTL 2] Japanese Unexamined Patent Application Publication No. 2021-42100

### Summary of Invention

### Technical Problem

The BN layer is formed at a high temperature. The SiC fibers in which the BN layer is formed are materials having improved heat resistance, but a strength is decreased by about 10% to 30% due to exposure to a high temperature for forming the BN layer.

The present disclosure has been made in view of such circumstances, and an object thereof is to provide a BN-coated ceramic fiber in which a decrease in strength in a BN layer forming step is suppressed and a strength close to an original strength of a ceramic fiber is maintained, a ceramic matrix composite material including same, and a method for producing a BN-coated ceramic fiber.

### Solution to Problem

In order to solve the above-described problem, the BN-coated ceramic fiber, the ceramic matrix composite material including same, and the method for producing a BN-coated ceramic fiber according to the present disclosure employ the following means.

The present disclosure provides a BN-coated ceramic fiber including a ceramic fiber containing SiC as a main component; and a BN layer containing BN as a main component and coating a surface of the ceramic fiber, in which the BN layer includes a first BN layer that is an amorphous phase and a second BN layer that is a crystalline phase, and the first BN layer is adjacent to the ceramic fiber and is sandwiched between the ceramic fiber and the second BN layer.

The present disclosure provides a ceramic matrix composite material including the BN-coated ceramic fiber, and a matrix containing SiC as a main component.

The present disclosure provides a method for producing a BN-coated ceramic fiber, including covering a surface of a ceramic fiber containing SiC as a main component with a first BN layer that is an amorphous phase, and then covering a surface of the first BN layer with a second BN layer that is a crystalline phase.

### Advantageous Effects of Invention

By forming an amorphous phase as a first layer on the surface of the ceramic fiber, a decrease in strength of the ceramic fiber during formation of the BN layer can be reduced as compared with the related art. As a result, the BN-coated ceramic fiber having an even higher strength than that in the related art and the ceramic matrix composite material including same are obtained.

### Brief Description of Drawings

FIG. 1 is a cross-sectional view of a BN-coated ceramic fiber.
FIG. 2 is a conceptual diagram of a chemical vapor deposition (CVD) apparatus as an example.
FIG. 3 is a schematic diagram of a ceramic matrix composite material according to an embodiment.
FIG. 4 is a schematic diagram in which the BN-coated ceramic fiber of FIG. 3 and an Si-based compound layer coating the BN-coated ceramic fiber are enlarged.
FIG. 5 is a diagram showing results of a single-fiber tensile test.
FIG. 6 is a transmission electron microscopy (TEM) image of Example.
FIG. 7 shows an enlarged image of an area surrounded by a square in FIG. 6 and an electron beam diffraction pattern of an area surrounded by a circle in the enlarged image.
FIG. 8 is a TEM image of a comparative example.
FIG. 9 shows an enlarged image of an area surrounded by a square in FIG. 8 and an electron beam diffraction pattern of an area surrounded by a circle in the enlarged image.

### Description of Embodiments

Hereinafter, an embodiment of a BN-coated ceramic fiber, a ceramic matrix composite material including same, and a method for producing a BN-coated ceramic fiber according to the present disclosure will be described with reference to the drawings.

The BN-coated ceramic fiber and the ceramic matrix composite material including same according to the present embodiment are suitable for members of aircraft engines and gas turbines.

### (BN-Coated Ceramic Fiber)

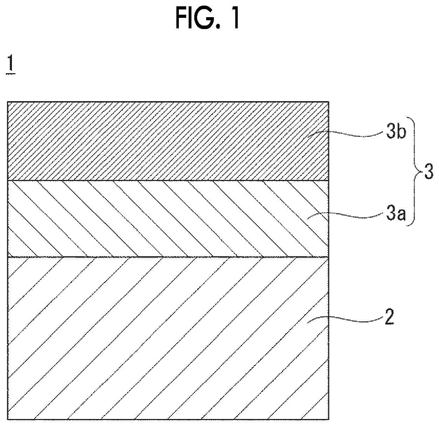

FIG. 1 is a cross-sectional view of a BN-coated ceramic fiber. A BN-coated ceramic fiber 1 includes a ceramic fiber 2 and a BN layer 3 that coats a surface of the ceramic fiber 2.

The ceramic fiber 2 contains silicon carbide (SiC) as a main component. More specifically, the ceramic fiber 2 contains 98 wt% or more of SiC, and an oxygen content thereof is 1 wt% or less. The ceramic fiber 2 may contain aluminum (Al), titanium (Ti), zirconium (Zr), and boron (B) in addition to oxygen. The ceramic fiber 2 is used in a form of a fiber bundle in which about 500 to 1,000 single fibers are bundled. The ceramic fiber 2 may be Hi-Nicalon (registered trademark) type S (manufactured by Nippon Carbon Co., Ltd.), Tyranno Fiber (registered trademark) SA (manufactured by UBE Corporation), Sylramic (registered trademark) Fiber (manufactured by COI Ceramics, Inc.), or the like.

The BN layer 3 contains boron nitride (BN) as a main component. The BN layer 3 has higher oxidation resistance than a carbon (C) layer in the related art. The BN layer 3 includes a first BN layer 3a and a second BN layer 3b.

The first BN layer 3a is an amorphous phase. The first BN layer 3a is adjacent to the ceramic fiber 2 and is sandwiched between the ceramic fiber 2 and the second BN layer 3b. By providing the first BN layer 3a that is an amorphous phase as an initial layer of the layer coating the surface of the ceramic fiber 2, thermal damage to the surface of the ceramic fiber 2 due to the BN layer 3 forming step can be reduced. A thickness of the first BN layer 3a is preferably 200 nm or less.

The second BN layer 3b is a crystalline phase. The second BN layer 3b is an outermost layer of the BN-coated ceramic fiber 1. The second BN layer 3b plays a role of reinforcing a bond between the ceramic fiber 2 and a matrix described below, preventing progression of matrix cracks, and suppressing the transmission of stress to the ceramic fiber 2. A thickness of the second BN layer 3b is preferably 250 nm or more.

The BN layer 3 (the first BN layer 3a and the second BN layer 3b) can be formed by a chemical vapor deposition method (CVD method). The first BN layer 3a may be formed by the CVD method using a precursor as a raw material. In the formation of the first BN layer 3a, a raw material containing a halide is not used. By using the raw material that does not contain a halide, a treatment of removing hydrogen halide from exhaust gas is not required. In addition, damage to the ceramic fiber 2 due to an active raw material gas or a by-product generated as a result of the CVD method can be reduced.

The first BN layer 3a that is an amorphous phase is directly formed on the surface of the ceramic fiber 2. A film formation temperature of the first BN layer 3a is 600°C or lower, preferably 550°C or lower, and more preferably 500°C or lower. The first BN layer 3a formed at that temperature is an amorphous phase.

The second BN layer 3b that is a crystalline phase is formed on the first BN layer 3a. A film formation temperature of the second BN layer 3b is preferably 1,000°C or higher. The second BN layer 3b formed at the temperature is a crystalline phase. The second BN layer 3b can be formed by any CVD method of the CVD method using a precursor as a raw material, a thermal CVD method using a raw material containing a halide, or a plasma CVD method. Since the second BN layer 3b is formed on the first BN layer 3a, even in a case where the CVD method using a raw material containing a halide is used for forming the second BN layer 3b, the first BN layer 3a protects the ceramic fiber 2, and the damage to the ceramic fiber 2 is small.

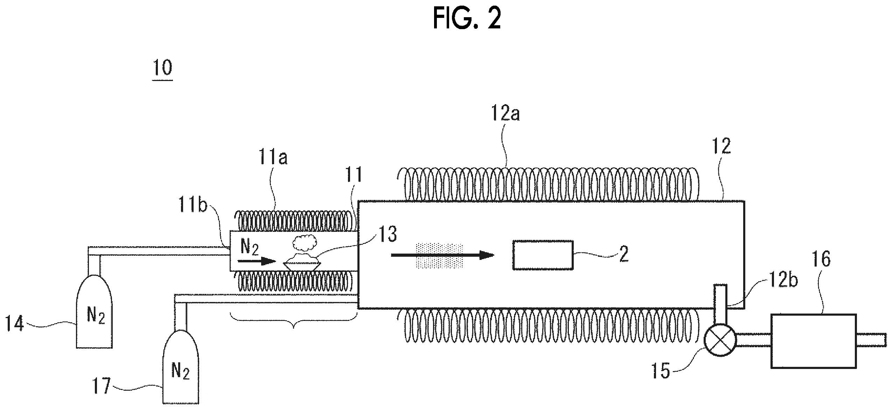

FIG. 2 shows a conceptual diagram of a CVD apparatus of the CVD method using a precursor as a raw material as an example. A CVD apparatus 10 of FIG. 2 includes a raw material supply chamber 11 and a film forming chamber 12.

A raw material (precursor 13) of the BN layer 3 is disposed in the raw material supply chamber 11. The precursor 13 is, for example, ammonia borane (H₃NBH₃), cyclotriborazane (B₃H₆N₃), borazene (aminoborane), or a polymer of these.

The raw material supply chamber 11 includes a raw material heating section 11a and a gas supply port 11b. The raw material heating section 11a is a coil heater or the like. At least a part of the precursor is heated by the raw material heating section 11a, and a carrier gas (for example, N₂ gas) is supplied from a gas source 14 into the raw material supply chamber 11 through the gas supply port 11b, whereby a - (B-N)-based gas or a -(B-N-C)-based gas is generated. A heating temperature by the raw material heating section 11a may be set to 55°C to 200°C. The -(B-N)-based gas or the -(B-N-C)-based gas generated in the raw material supply chamber 11 flows into the film forming chamber 12.

The film forming chamber 12 includes a film formation heating section 12a and a gas exhaust port 12b. The film formation heating section 12a is a coil heater or the like. A decompression section 16 is connected to the gas exhaust port 12b through a pressure controller 15. The decompression section 16 is a pump or the like. The decompression section 16 and the pressure controller 15 can control the film forming chamber 12 to be at a predetermined pressure.

In a case where the inside of the raw material supply chamber 11 and the film forming chamber 12 of the CVD apparatus 10 is replaced with a gas having low activity, such as N₂ gas or Ar gas, and then the film forming chamber 12 controlled to a predetermined pressure is heated by the film formation heating section 12a, and the - (B-N)-based gas or the -(B-N-C)-based gas is caused to flow into the film forming chamber 12, the BN layer 3 containing boron nitride (BN) as a main component is formed on the ceramic fiber 2. A diluent gas (N₂ gas) may be supplied from a gas source 17 to the film forming chamber 12.

The first BN layer 3a formed at 600°C or lower is a -(B-N-Hy)n- layer or a - (B-N-Cx-Hy)n- layer having a semi-inorganic structure in which ceramic conversion has not yet been completed. Therefore, in a case of being exposed to the air as it is, it reacts with water vapor and oxygen in the air and decomposes. Therefore, in a case where the ceramic fiber 2 in which the first BN layer 3a is formed is exposed to the air, after forming the first BN layer 3a at 600°C or lower and before being exposed to the air, the inside of the film forming chamber 12 is set to an atmosphere of a gas having low activity, such as N₂ gas or Ar gas, controlled to a predetermined pressure, and the first BN layer 3a is heated (heat-treated) at 900°C or higher by the film formation heating section 12a to be stabilized.

In a case where the amorphous first BN layer 3a is formed on the surface of the ceramic fiber 2 and then the crystalline second BN layer 3b is formed thereon, the second BN layer 3b is formed by any CVD method of the CVD method using a precursor as a raw material, the thermal CVD method using a raw material containing a halide, or the plasma CVD method. A film formation temperature of the second BN layer 3b in this case is preferably 1,000°C or higher.

In a case where the film formation of the second BN layer 3b is performed by the CVD method using the same precursor as the film formation of the first BN layer 3a, the film formation of the first BN layer 3a and the film formation of the second BN layer 3b may be continuously performed. For example, in a case where the CVD apparatus 10 of FIG. 2 is used, first, the first BN layer 3a is formed on the surface of the ceramic fiber 2 under predetermined conditions using a part of the precursor in the raw material heating section 11a. Next, the carrier gas of the gas source 14 is stopped, and the ceramic fiber 2 is heated (heat-treated) by the film formation heating section 12a at 1,000°C or higher under only the gas flow from the gas source 17. Thereafter, the carrier gas is supplied from the gas source 14 again to the raw material supply chamber 11, and the precursor remaining in the raw material supply chamber 11 is heated by the raw material heating section 11a to 55°C to 200°C to cause the -(B-N)-based gas or the -(B-N-C)-based gas generated from the precursor to flow into the film forming chamber 12. As a result, the crystalline second BN layer 3b is formed on the first BN layer 3a.

### (Ceramic Matrix Composite Material)

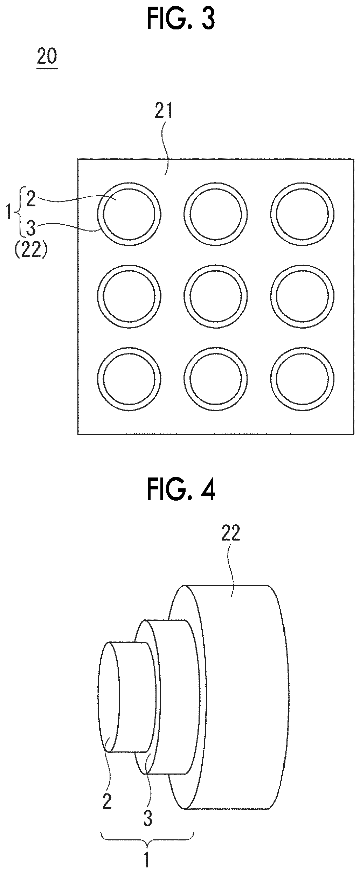

FIG. 3 is a schematic diagram of a ceramic matrix composite material according to the present embodiment. FIG. 4 is a schematic diagram in which the BN-coated ceramic fiber of FIG. 3 and an Si-based compound layer coating the BN-coated ceramic fiber are enlarged.

A ceramic matrix composite material 20 includes the BN-coated ceramic fiber 1 and a matrix 21. The ceramic matrix composite material 20 may include an Si-based compound layer 22 between the BN-coated ceramic fiber 1 and the matrix 21.

The BN-coated ceramic fiber 1 is as described above.

The matrix 21 contains SiC as a main component. More specifically, the matrix 21 contains 50% or more of SiC. The matrix 21 may contain carbon (C) or silicon (Si).

The ceramic matrix composite material 20 can be produced by a melt infiltration method (MI method), a chemical vapor infiltration method (CVI method), a polymer infiltration and pyrolysis method (PIP method), or the like. The ceramic matrix composite material 20 is preferably produced by the melt infiltration method (MI method).

The Si-based compound layer 22 contains an Si-based compound as a main component. More specifically, the Si-based compound layer 22 contains 90% or more of the Si-based compound. The Si-based compound may be SiC or Si₃N₄. The Si-based compound layer 22 may contain carbon (C) or nitrogen (N). The Si-based compound layer 22 protects the BN layer from high-temperature oxidation (particularly, molten Si) and plays a role in preventing oxidation degradation.

The Si-based compound layer 22 can be formed on the surface of the BN-coated ceramic fiber 1 by the CVD method, a physical vapor deposition (PVD) method, a liquid phase sintering method, or the like. The Si-based compound layer 22 is preferably produced by the CVD method and is formed to cover the entire surface of the BN-coated ceramic fiber 1.

Next, the operations and effects of the embodiment will be described.

### (Film Formation Temperature of BN Layer)

For the BN-coated ceramic fiber in which the BN layer was formed by changing the film formation temperature, a single-fiber tensile test was performed in accordance with JIS R 1657 "Test methods for reinforcement properties of continuous fiber-reinforced ceramic matrix composite materials". In a case of calculating the tensile strength, the thickness of the BN layer was ignored.

As the ceramic fiber, Hi-Nicalon (registered trademark) type S (manufactured by Nippon Carbon Co., Ltd.) was used. H₃NBH₃ (precursor) and N₂ (carrier gas) were used as the raw material of the BN layer. The film formation was performed under the same conditions except for the film formation temperature. The film formation temperature is a set temperature of the film formation heating section. The CVD apparatus shown in FIG. 2 was used for forming the BN layer.

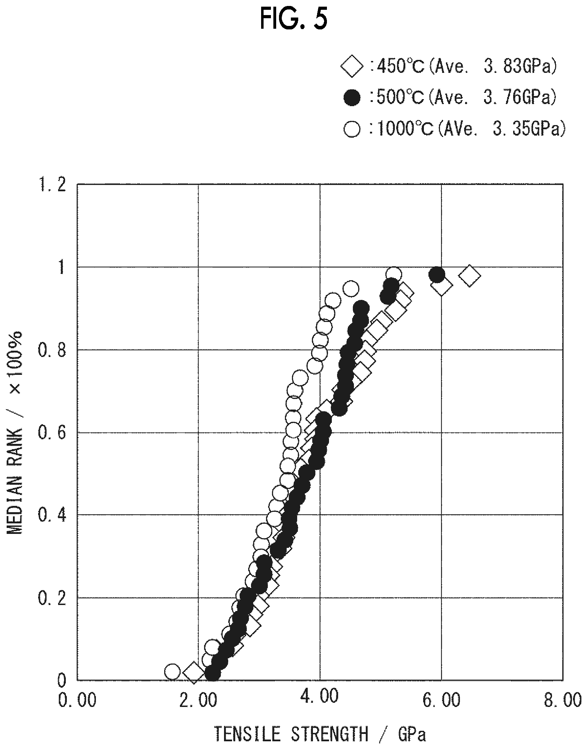

FIG. 5 shows the test results. The average tensile strength of the BN-coated ceramic fiber in which the BN layer was formed at 1,000°C was 3.35 GPa. The average tensile strength of the BN-coated ceramic fiber in which the BN layer was formed at 500°C was 3.76 GPa. The average tensile strength of the BN-coated ceramic fiber in which the BN layer was formed at 450°C was 3.83 GPa.

Although not shown in FIG. 5, the average tensile strength of the untreated ceramic fiber before the formation of the BN layer was about 3.7 GPa. In a case where the film formation was performed at 1,000°C, the strength was decreased by about 10% compared to the untreated ceramic fiber. On the other hand, in a case where the film formation was performed at 500°C and 450°C, the decrease in strength was not observed. The difference in numerical value of the average tensile strength from the untreated one is within the error range.

In addition, in a case where the film formation of the BN layer was repeated a plurality of times at the same temperature, it was confirmed that the decrease in strength was clear in only the first time of the film formation at 1,000°C, and the decrease in strength was not confirmed in the second and subsequent film formations.

From the above results, it was clarified that the decrease in fiber strength due to the film formation treatment can be avoided by lowering the temperature during the formation of the initial layer of the BN layer directly formed on the surface of the ceramic fiber.

### (Film Formation Temperature and Crystal Structure of BN Layer)

The ceramic matrix composite material was produced according to the above-described embodiment, and the cross section thereof was observed with a transmission electron microscope (Example). As a comparison, the ceramic matrix composite material was produced and the cross section thereof was observed in the same manner as in Example using the BN-coated ceramic fiber in which the film formation order of the first BN layer and the second BN layer was reversed (comparative example). The other film formation conditions were the same.

As the ceramic fiber, Hi-Nicalon (registered trademark) type S (manufactured by Nippon Carbon Co., Ltd.) was used. H₃NBH₃ (precursor) and N₂ (carrier gas) were used as the raw material of the BN layer. Silicon tetrachloride (SiCl₄) and methane (CH₄) were used as the raw material of the Si-based compound layer. Silicon (Si) metal and carbon (C) powder were used as the raw material of the matrix. The CVD apparatus shown in FIG. 2 was used for forming the BN layer.

The film formation conditions of the first BN layer are as follows.
Raw material heating section temperature: 115°C
Film formation heating section temperature: 500°C (actual measured temperature in furnace: 460°C to 480°C)
Film forming chamber pressure: 10.6 kPa to 10.9 kPa

The film formation conditions of the second BN layer are as follows.
Raw material heating section temperature: 115°C
Film formation heating section temperature: 1,150°C (actual measured temperature in furnace: 1,100°C)
Film forming chamber pressure: normal pressure

The film formation conditions of the Si-based compound layer are as follows.
Raw material heating section temperature: 60°C
Film formation heating section temperature: 900°C (actual measured temperature in furnace: 860°C to 880°C)
Film forming chamber pressure: 10.7 kPa

The production conditions of the ceramic matrix composite material are as follows.
Si infiltration heating temperature: 1,400°C
Heating furnace atmosphere: argon (Ar), normal pressure

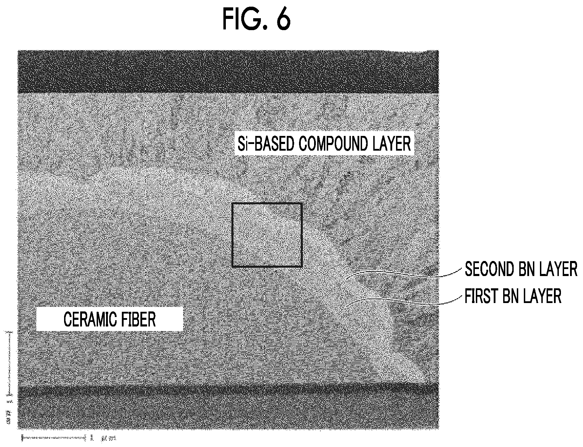

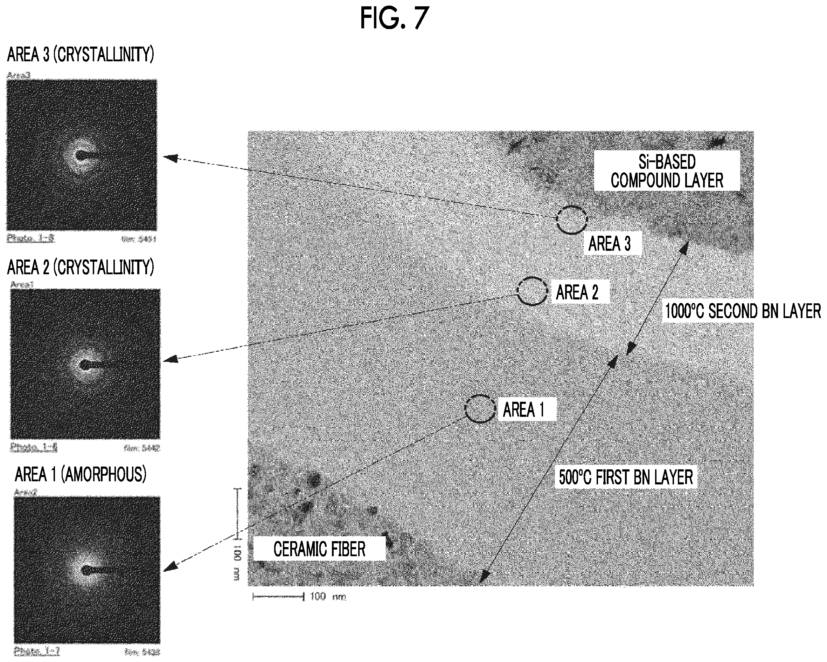

FIG. 6 is a TEM image of Example. FIG. 7 shows an enlarged image of an area surrounded by a square in FIG. 6 and an electron beam diffraction pattern of an area surrounded by a circle in the enlarged image.

In Example in which the first BN layer and the second BN layer were formed in this order, it was confirmed that the BN layer on the surface of the ceramic fiber had a two-layer structure (see FIG. 6). According to the electron beam diffraction pattern, it was observed that the first BN layer (AREA 1) was amorphous, and the second BN layer (AREAS 2 and 3) had crystalline characteristics.

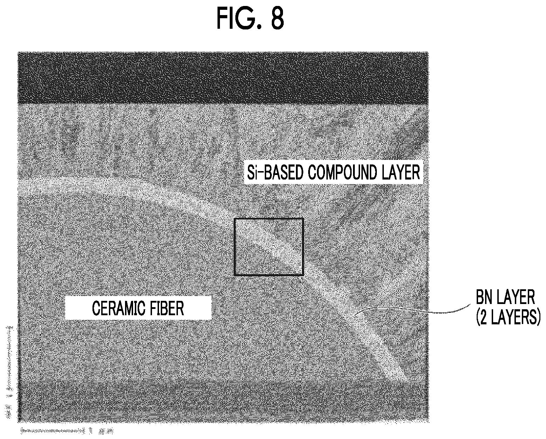

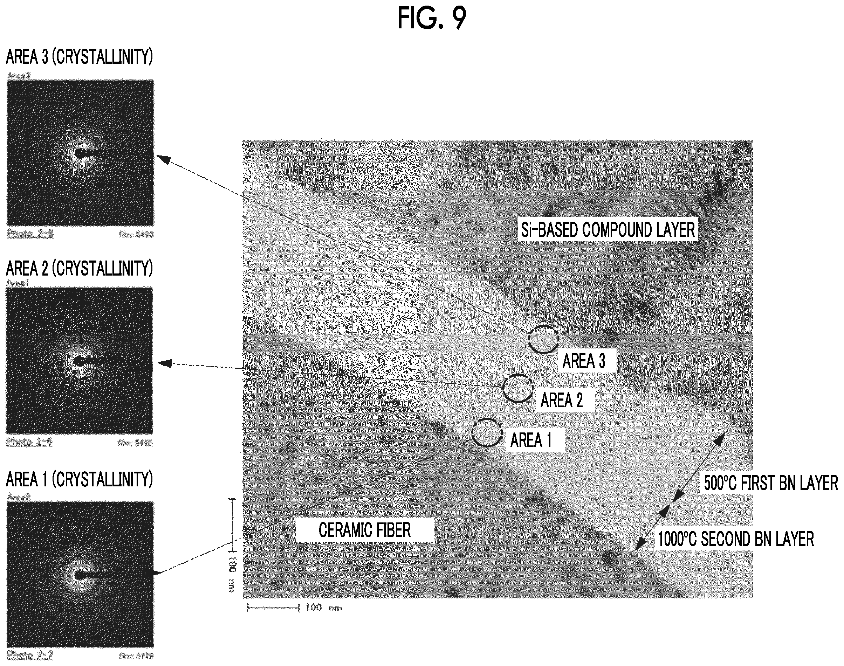

FIG. 8 is a TEM image of the comparative example. FIG. 9 shows an enlarged image of an area surrounded by a square in FIG. 8 and an electron beam diffraction pattern of an area surrounded by a circle in the enlarged image.

In the comparative example in which the second BN layer and the first BN layer were formed in this order, a clear boundary between the first BN layer and the second BN layer was not confirmed in the BN layer on the surface of the ceramic fiber (see FIG. 9). In the electron beam diffraction pattern, crystalline characteristics were observed in all of AREAS 1, 2, and 3.

For the BN-coated ceramic fiber used in Example and the comparative example, a single-fiber tensile test was performed in accordance with JIS R 1657 "Test methods for reinforcement properties of continuous fiber-reinforced ceramic matrix composite materials". In a case of calculating the tensile strength, the thickness of the BN layer was ignored.

The average tensile strength of Example in which the first BN layer and the second BN layer were formed in this order was 3.84 GPa. On the other hand, the average tensile strength of the comparative example in which the second BN layer and the first BN layer were formed in this order was about 3.2 GPa. The average tensile strength of the untreated ceramic fiber was about 3.7 GPa. In the comparative example, the strength was decreased by about 14% in the process of forming the BN layer. On the other hand, in Example, the decrease in strength was not observed.

From the above results, it was suggested that the decrease in strength in the process of forming the BN layer could be prevented by forming the initial layer of the BN layer as an amorphous phase. In the CVD method using a precursor as a raw material, the amorphous BN layer can be formed by setting the film formation temperature to 600°C or lower.

### <Supplementary Notes>

The BN-coated ceramic fiber, the ceramic matrix composite material including same, and the method for producing a BN-coated ceramic fiber according to the embodiment described above are understood, for example, as follows.

A BN-coated ceramic fiber (1) according to a first aspect of the present disclosure includes a ceramic fiber containing SiC as a main component, and a BN layer (3) containing BN as a main component and coating a surface of the ceramic fiber, in which the BN layer includes a first BN layer (3a) that is an amorphous phase and a second BN layer (3b) that is a crystalline phase, and the first BN layer is adjacent to the ceramic fiber and is sandwiched between the ceramic fiber and the second BN layer.

The BN layer that is an amorphous phase can be formed at a lower temperature than the BN layer that is a crystalline phase. By setting the initial layer of the BN layer in contact with the surface of the ceramic fiber to the amorphous phase, the decrease in strength of the ceramic fiber during the formation of the BN layer can be reduced. As a result, a BN-coated ceramic fiber in which the original strength of the ceramic fiber is maintained is obtained.

A ceramic matrix composite material (20) according to a second aspect of the present disclosure includes the BN-coated ceramic fiber according to the first aspect, and a matrix (21) containing SiC as a main component.

The ceramic matrix composite material produced using the BN-coated ceramic fiber according to the first aspect is a ceramic matrix composite material having a higher strength than that in the related art.

A ceramic matrix composite material according to a third aspect of the present disclosure includes, in the second aspect, an Si-based compound layer (22) containing an Si-based compound as a main component, between the BN-coated ceramic fiber and the matrix.

The Si-based compound has high oxidation resistance. Therefore, by disposing the Si-based compound layer between the BN-coated ceramic fiber and the matrix, the BN layer can be protected from high-temperature oxidation in the use environment.

A method for producing a BN-coated ceramic fiber according to a fourth aspect of the present disclosure includes covering a surface of a ceramic fiber containing SiC as a main component with a first BN layer that is an amorphous phase, and then covering a surface of the first BN layer with a second BN layer that is a crystalline phase.

The BN layer that is an amorphous phase can be formed at a lower temperature than the BN layer that is a crystalline phase. By forming the first layer of the BN layer at a low temperature, the decrease in strength of the ceramic fiber during the formation of the BN layer can be reduced.

### Reference Signs List

1: BN-coated ceramic fiber
2: ceramic fiber
3: BN layer
3a: first BN layer
3b: second BN layer
10: CVD apparatus
11: raw material supply chamber
11a: raw material heating section
11b: gas supply port
12: film forming chamber
13: precursor
14, 17: gas source
15: pressure controller
16: decompression section
20: ceramic matrix composite material
21: matrix
22: Si-based compound layer

## Claims

1. A BN-coated ceramic fiber comprising:
a ceramic fiber containing SiC as a main component; and
a BN layer containing BN as a main component and coating a surface of the ceramic fiber,
wherein the BN layer includes a first BN layer that is an amorphous phase and a second BN layer that is a crystalline phase, and
the first BN layer is adjacent to the ceramic fiber and is sandwiched between the ceramic fiber and the second BN layer.

2. A ceramic matrix composite material comprising:
the BN-coated ceramic fiber according to Claim 1; and
a matrix containing SiC as a main component.

3. The ceramic matrix composite material according to Claim 2, further comprising:
an Si-based compound layer containing an Si-based compound as a main component, between the BN-coated ceramic fiber and the matrix.

4. A method for producing a BN-coated ceramic fiber, the method comprising:
covering a surface of a ceramic fiber containing SiC as a main component with a first BN layer that is an amorphous phase; and
then covering a surface of the first BN layer with a second BN layer that is a crystalline phase.
